Europäisches Patentamt

European Patent Office

Office européen des brevets

(19)

(11) **EP 0 848 244 A2**

(12) **EUROPÄISCHE PATENTANMELDUNG**

(43) Veröffentlichungstag:
17.06.1998 Patentblatt 1998/25

(51) Int. Cl.⁶: **G01N 21/88**

(21) Anmeldenummer: 97120813.7

(22) Anmeldetag: 27.11.1997

(84) Benannte Vertragsstaaten:
**AT BE CH DE DK ES FI FR GB GR IE IT LI LU MC NL PT SE**
Benannte Erstreckungsstaaten:
**AL LT LV MK RO SI**

(30) Priorität: **14.12.1996 DE 19652124**

(71) Anmelder:
**Micronas Intermetall GmbH
79108 Freiburg (DE)**

(72) Erfinder:
• **Seeger, Hartmut
79348 Freiamt (DE)**
• **Sommer, Bernd
2024 St. Aubine (CH)**

(74) Vertreter: **Hornig, Leonore, Dr.
MICRONAS INTERMETALL GmbH,
Patentabteilung,
Hans-Bunte-Strasse 19
79108 Freiburg (DE)**

(54) **Verfahren und Vorrichtung zum automatischen Überprüfen von Positionsdaten j-förmiger elektrischer Kontaktanschlüsse**

(57)    Die Erfindung betrifft ein Verfahren zum automatischen Überprüfen von Positionsdaten j-förmiger elektrischer Kontaktanschlüsse 5 an einem in ein Gehäuse 3 eingebrachtes Halbleierbauteil bezüglich einer zu der Unterseite 4 des Gehäuses parallelen Ebene, bei dem die Unterseite 4 des Gehäuses 3 mittels Licht aus einer Beleuchtungseinrichtung 6 unter mindestens einem reproduzierbaren Beleuchtungswinkel beleuchtet wird, das von der Unterseite 4 des Gehäuses 3 und den Kontaktanschlüssen 5 im wesentlichen senkrecht reflektierte Licht von einer Kamera 7 ortsauflösend aufgenommen wird, die Bildsignale der Kamera 7 einer Bildsignalverarbeitungseinrichtung 8 zugeführt werden und wenigstens ein Datensatz mit einem dem Halbleiterbauteil 3 zugeordneten Erkennungszeichen gespeichert wird und aus den Bildsignalen Positionsdaten der Kontaktanschlüsse 5 bestimmt werden und durch einen Vergleich der Positionsdaten mit Referenzdaten eine Abweichung der Positionsdaten von vorgegebenen Sollwerten bestimmt wird.

Fig. 1

**Beschreibung**

Die Erfindung betrifft ein Verfahren zum automatischen Überprüfen von Positionsdaten j-förmiger elektrischer Kontaktanschlüsse an einem, in ein Gehäuse eingebrachtes Halbleiterbauteil bezüglich einer zu der Unterseite des Gehäuses parallelen Ebene, wobei das Gehäuse aus einem lichtabsorbierenden Material besteht, und die Kontaktanschlüsse sich von einer Seitenfläche des Gehäuses zu dessen Unterseite erstrecken.

Elektrische Kontaktanschlüsse dienen dazu, die Halbleiterbauteile mit der Außenwelt zu verbinden. Die Kontaktanschlüsse ragen aus dem Gehäuse heraus und sind j-förmig gebogen, so daß sie im wesentlichen unter dem Gehäuse des Halbleiterbauteils verlaufen. Das Halbleiterbauteil wird auf einer Leiterplatte dadurch befestigt, daß die elektrischen Kontaktanschlüsse auf Kontaktflächen der Platine aufgebracht und verlötet werden.

Die j-förmigen Kontaktanschlüsse werden durch Form- und Stanzverfahren hergestellt. Bei diesen Prozessen können Fehler auftreten, die insbesondere durch Fehlstanzungen aufgrund von Fremdmaterial im Werkzeug zustande kommen. Da solche Fehler nach dem Auflöten des Bauelementes nicht mehr korrigiert werden können, da sich die Kontaktanschlüsse unter dem Bauelement befinden, ist eine Überprüfung der j-förmigen elektrischen Kontaktanschlüsse, insbesondere deren Positionsdaten, direkt nach den Form- und Stanzprozessen erforderlich. Dabei ist es insbesondere wichtig, die Positionsdaten in einer zu der Unterseite des Gehäuses parallelen Ebene (xy-Ebene) auf Kolinearität zu überprüfen. Unerwünschte Verschiebungen der Kontaktanschlüsse in der xy-Ebene können durch Verbiegen der Kontaktanschlüsse zustande kommen. Eine Verschiebung der Kontaktanschlüsse in der xy-Ebene kann auch dann vorliegen, wenn die Kontaktanschlüsse koplanar sind, d.h. ihr tiefster Punkt jeweils den gleichen Abstand von der Gehäuseunterseite hat. Diese Verbiegung wird auch „bow in" bzw. „bow out" genannt. Daher ist eine Überprüfung von Positionsdaten der Kontaktanschlüsse in der xy-Ebene, also auf Kolinearität, unabhängig von einer Überprüfung auf Koplanarität der Kontaktanschlüsse erforderlich. Übliche automatische Verfahren, wie optische Meßverfahren mit Durchlicht, kommen nicht in Betracht, da die j-förmige Kontaktanschlüsse zum größten Teil unter dem nicht lichtdurchlässigen Bauteil verschwinden. Daher wird in der Praxis eine manuelle Sichtprüfung durchgeführt. Hierzu werden beispielsweise mehrere Bauelemente entlang einer Geraden angeordnet. Der Beobachter schaut bei jedem Bauelement, ob die einzelnen Kontaktanschlüsse in etwa gleichen Abstand zu der Geraden haben. Die Bauelemente, die seines Erachtens Kontaktanschlüsse mit zu großen Abweichungen in der xy-Ebene aufweisen, werden dann aussortiert. Die Zuverlässigkeit der Auswahl unterliegt somit der Aufmerksamkeit des Beobachters.

Der Erfindung liegt die Aufgabe zugrunde, ein Verfahren und eine Vorrichtung zur automatischen Überprüfung von Positionsdaten j-förmiger elektrischer Kontaktanschlüsse von Halbleiterbauteilen zu schaffen.

Diese Aufgabe wird durch ein Verfahren mit den Merkmalen des Patentanspruchs 1 gelöst. Ferner wird die Aufgabe durch eine Vorrichtung mit den Merkmalen des Patentanspruchs 10 gelöst.

Bevorzugte weitere Ausführungsbeispiele sind in den Unteransprüchen offenbart.

Bei j-förmigen Kontaktanschlüssen wird im wesentlichen das Licht von der Stelle senkrecht zu der Gehäuseunterseite reflektiert, an der die Krümmung des Kontaktanschlusses eine zu der Gehäuseunterseite parallele Tangente aufweist. Diese Stelle entspricht dem tiefsten, d.h. den am weitesten von der Gehäuseunterseite entfernten Punkt des Kontaktanschlusses. An dieser Stelle wird der Kontaktanschluß beim Verlöten auf eine Platine aufgesetzt. Von den übrigen Punkten des Kontaktanschlusses wird das Licht in andere Richtungen reflektiert, da in diesen Punkten die Tangente gegenüber der Unterseite des Gehäuses des Bauelements geneigt ist. Da das Gehäuse des Halbleiterbauteils aus einem lichtabsorbierenden Material besteht, wird von diesem nur sehr wenig Licht reflektiert. Somit gibt das senkrecht zu der Unterseite des Gehäuses reflektierte Licht die Position der Kontaktanschlüsse, genauer die Position des tiefsten Bereichs der Kontaktanschlüsse in der xy-Ebene wieder. Die so erhaltenen Bildsignale der Kamera werden in einer Bildsignalverarbeitungseinrichtung als ein Datensatz verarbeitet und gespeichert. Es kann zur Aufnahme des Bildes eine CCD-Kamera verwendet werden. Durch Vergleich der Positionsdaten der Kontaktanschlüsse, die aus den Bildsignalen gewonnen werden, mit Referenzdaten wird bestimmt, in wie weit die Positionsdaten eines jeden der Kontaktanschlüsse von einem vorgegebenen Sollwert abweichen. Bei diesem Verfahren kann ein Bild von der gesamten Unterseite des Gehäuses mit allen Kontaktanschlüssen aufgenommen werden. Da für jedes Bauelement festgestellt wird, ob es den vorgegebenen Sollwerten genügt, kann jedes Bauelement für welches dies nicht zutrifft, aussortiert werden.

Bevorzugterweise wird das Licht unter einem im wesentlichen senkrechten Beleuchtungswinkel auf das Halbleiterbauteil gelenkt.

Vorteilhafterweise werden die Halbleiterbauteile, deren Positionsdaten von den vorgegebenen Sollwerten abweichen, automatisch aussortiert. Dann können die nichtaussortierten Bauelemente automatisch in eine zum Verkauf vorgesehene Verpackung eingeordnet werden. Durch die erfindungsgemäße automatische Überprüfung von Positionsdaten der Kontaktanschlüsse wird eine größere Zuverlässigkeit im Erkennen von Bauelementen, die von den Sollwerten abweichen, erzielt und eine erheblich schnellere Überprüfung der Positionsdaten der Kontaktanschlüsse ermöglicht.

Es ist günstig, wenn die Oberseite des Gehäuses mittels einer Lichtquelle beleuchtet wird, wobei das in die Kamera gestreute Licht gemessen wird und aus dem so gewonnenen Datensatz von Bildsignalen die Lage von wenigstens einer Kante des Gehäuses bestimmt und gespeichert wird. Da das Gehäuse aus einem lichtabsorbierenden Material besteht, kann durch die Lichtquelle eine indirekte Hintergrundbeleuchtung erzeugt werden, wodurch eine genaue Schattenrißprojektion des Gehäuses in der Kamera entsteht. Es können so die Kanten des Gehäuses und damit die Lage des Bauteils in der Meßposition genau bestimmt werden. Das Gehäuse des Bauteils besteht oft aus schwarzem Epoxidherz-Material.

Ferner können die Bildsignale mit einem vorgegebenen Schwellwert verglichen werden, die Bildsignale die größer als der Schwellwert sind, zur Bestimmung von Reflexgebieten verwendet werden, durch welche die jeweilige Position der Kontaktanschlüsse in einer zu der Unterseite parallelen Ebene bestimmt wird. Dadurch wird Licht, welches nicht zu den die Kontaktanschlüsse darstellenden Reflexgebieten gehört, ausgeschlossen, so ein Bild mit schärferen Konturen entsteht. Es kann dann der jeweilige Schwerpunkt $r_{cm}$ der Reflexgebiete ermittelt werden. Dieser gibt jeweils den tiefsten Punkt der Kontaktanschlüsse wieder. Die Ermittlung des Schwerpunktes kann gemäß folgender Formeln ermittelt werden:

$$\vec{r}_{cm} = \frac{\int \vec{r} \, dm}{\int dm} = \frac{1}{N} * \{\frac{\sum\limits_{i=1}^{N} x_i}{\sum\limits_{i=1}^{N} y_i}\}$$

Gemäß einem Ausführungsbeispiel der Erfindung wird die Lage der Reflexgebiete bzw. der Schwerpunkte der Reflexgebiete relativ zu einer Kante des Gehäuses bestimmt. Es kann der Abstand der Reflexgebiete zu der Gehäusekante bestimmt werden und die Abweichung von einem vorgegebenen Sollwert ermittelt werden. Das Aussortieren von Halbleiterbauelementen erfolgt dann, wenn der ermittelte Abstand außerhalb der vorgegebenen Toleranzen für das entsprechende Bauelement liegen.

Gemäß einem weiteren Ausführungsbeispiel der Erfindung wird die relative Lage der Reflexgebiete bzw. der Schwerpunkte der Reflexgebiete zueinander ermittelt, wobei insbesondere der Abstand eines Reflexgebietes zu den benachbarten Reflexgebiete bzw. der Abstand eines Reflexgebietes von einer durch die Reflexgebiete parallel zu einer Kante des Gehäuses verlaufenden Geraden bestimmt werden. Da üblicherweise die Kontaktanschlüsse auf einer Geraden parallel zu einer Kante des Gehäuses liegen, kann aus dem Abstand zu den benachbarten Reflexgebieten die Abweichung von der Lage der Kontaktanschlüsse in der xy-Ebene und aus dem Abstand eines Reflexgebietes zu der durch alle Reflexgebiete einer Linie verlaufenden Gerade die Abweichung in der Richtung senkrecht zu der Geraden bestimmt werden. Die Gerade kann dabei durch Berechnung mit einem mathematischen Verfahren duch die Reflexgebiete oder durch die Reflexgebiete, die nur wenig von einer Geraden abweichen, gelegt werden.

Als Referenzdaten können die gespeicherten Bildsignale einer vorangegangenen Messung an einem oder Mittelwerte von den Bildsignalen von vorangegangenen Messungen an mehreren Gehäusen mit korrekt angeordneten Kontaktanschlüssen verwendet werden.

Gemäß einer erfindungsgemäßen Weiterbildung kann Licht unter verschiedenen Beleuchungswinkeln nacheinander auf das Gehäuse und die Kontaktanschlüsse gelenkt werden, jeweils das senkrecht von dem Gehäuse und den Kontaktanschlüssen reflektierte Licht von der Kamera aufgenommen und die pro Beleuchtungswinkel erzeugten Bilddaten jeweils als ein Datensatz gespeichert werden und aus den zu einem Halbleiterbauteil gehörenden Datensätzen Formdaten der Kontaktanschlüsse bestimmt und mit Referenzdaten verglichen werden. Hierdurch kann das Bogenprofil eines jeden Kontaktanschlusses genau vermessen werden. Daraus können weitere Informationen über die Qualität der Kontaktanschlüsse, insbesondere über die Planarität der Kontaktflächen abgeleitet werden. Auch können aus der Form der Kontaktanschlüsse Aussagen über ihre mechanische Stabilität gemacht werden. Da das Licht der Lichtquellen, welches auf die Kontaktanschlüsse auftrifft, jeweils einen anderen Einfallswinkel gegenüber der vertikalen Achse aufweist, wird von verschiedenen, gekrümmten Bereichen des Kontaktanschlusses reflektiertes Licht in die Kamera reflektiert. Da die Position der jeweiligen Lichtquelle bekannt ist, kann in der Bildsignalverarbeitungseinrichtung der Neigungswinkel des Kontaktanschlusses an der Stelle, an der das Licht reflektiert wurde, bestimmt werden. So erhält man pro Lichtquelle einen Neigungswinkel des Kontaktanschlusses an der den Lichtreflex erzeugenden Stelle, so daß insgesamt der Verlauf der Krümmung des Kontaktanschlusses bestimmt werden kann. Durch einen direkten Vergleich des berechneten Profils mit einem guten Referenzprofil kann bestimmt werden, ob das Bauteil vorgegebenen Bedingungen genügt.

Im folgenden wird die Erfindung anhand der Zeichnung näher erläutert.

Es zeigen:

Fig. 1 ein erstes Ausführungsbeispiel einer erfindungsgemäßen Vorrichtung,

Fig. 2 ein nach dem erfindungsgemäßen Verfahren erzeugtes Bild von der unteren Seite des Gehäuses mit den Kontaktanschlüssen,

Fig. 3a den Querschnitt durch ein Gehäuse eines Halbleiterbauelements mit einem korrekten j-förmigen Kontaktanschluß,

Fig. 3b mit einem nach außen gebogenen j-förmigen Kontaktanschluß und

Fig. 3c mit einer nach innen gebogenen j-förmigen Kontaktanschluß und

Fig. 4 ein zweites Ausführungsbeispiel der erfindungsgemäßen Vorrichtung,

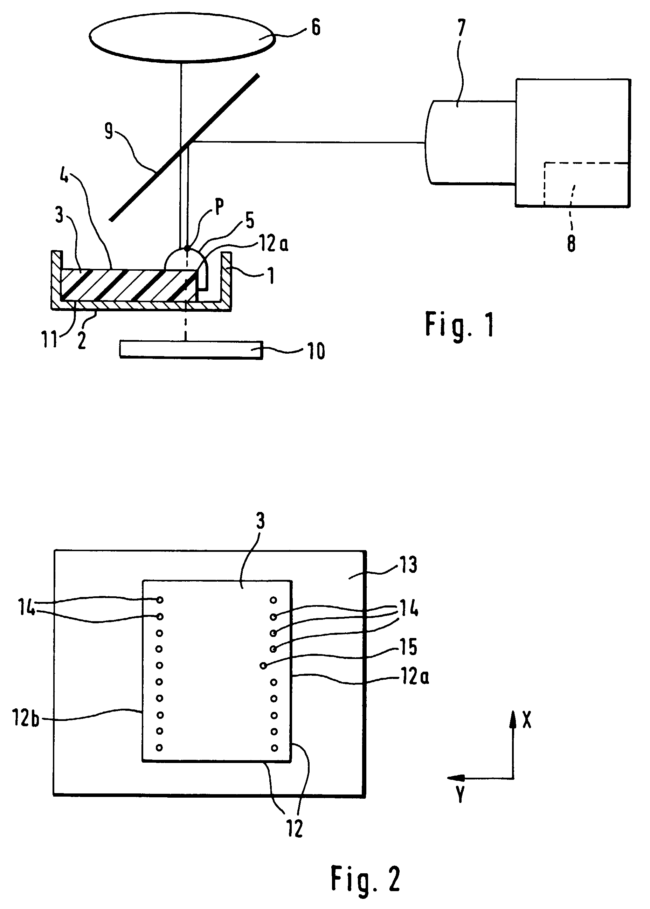

Fig. 1 zeigt eine schematische Darstellung einer erfindungsgemäßen Vorrichtung im Querschnitt. Auf einer Transportschiene 1 ist in einer Meßposition 2 ein Gehäuse 3, das eine nichtgezeigtes Halbleiterbauelement enthält, angeordnet. Das Gehäuse 3 ist mit seiner Unterseite 4 nach oben angeordnet. Es ist eine der j-förmigen Kontaktanschlüsse 5 gezeigt, der sich von einer Seitenflächen des Gehäuses 3 zu dessen Unterseite 4 erstreckt. Es handelt sich hier um einen korrekten, nicht verbogenen Kontaktanschluß 5. In dem gezeigten Ausführungsbeispiel sind die Kontaktanschlüsse 5 hintereinander entlang einer Kante des Gehäuses 3 angeordnet. In der erfindungsgemäßen Vorrichtung können mit dem gleichen Verfahren ebenfalls Gehäuse vermessen werden, bei denen die Kontaktanschlüsse entlang von mehreren Kanten des Gehäuses vorgesehen sind.

Oberhalb der Meßposition 2 ist eine Beleuchtungseinrichtung 6 vorgesehen, mittels der Licht unter einem vorgegebenen Beleuchtungswinkel, der hier einen senkrechten Beleuchtungswinkel hinsichtlich der Fläche der Meßposition 2 bildet, auf diese gelenkt wird. Das Gehäuse 3 des Halbleiterbauelements besteht aus lichtabsorbierendem Material, meist aus schwarzem Epoxi, und die elektrischen Kontaktanschlüsse 5 aus einem lichtreflektierenden, nämlich einem elektrisch leitenden Material. Das auf das Gehäuse 3 und die Kontaktanschlüsse 5 auftreffende Licht wird daher von den Kontaktanschlüssen 5 reflektiert. Eine Kamera 7 mit einer Bildsignalverarbeitungseinrichtung 8 ist derart angeordnet, daß das senkrecht von dem Gehäuse 3 bzw. den Kontaktanschlüssen 5 reflektiertes Licht über einen Strahlteiler 9 in die Kamera 7 gelenkt wird. Das von dem Kontaktanschluß 5 in die Kamera 7 reflektierte Licht, welches senkrecht zu der Ebene der Meßposition 2 bzw. der Unterseite 4 des Gehäuses 3 reflektiert wird, wird von dem Punkt P des Kontaktanschlusses 5 reflektiert, in dem die Tangente waagrecht, d.h. parallel zu der Unterseite 4 des Gehäuses 3 verläuft. Damit kommt der von der Kamera 7 gemessene Lichtreflex durch Reflexion des tiefsten Punktes P des Kontaktanschlusses 5 zustande. Mit diesem tiefsten Punkt P sitzt der Kontaktanschluß 5 später auf einer Unterlage, insbesondere auf einer Lötplatine auf. Es ist wichtig, daß die tiefsten Punkte P einer Reihe von Kontaktanschlüssen 5 eine genaue Position in der Ebene parallel zu der Unterseite 4 des Gehäuses 3 haben. Wie genau diese Position für die einzelnen Kontaktanschlüsse 5 eingehalten werden muß, hängt von den vorgegebenen Toleranzen für die vorgesehene Anwendung des Halbleiterbauteils ab. Die Bildsignale der Kamera 7 werden in der Bildsignalverarbeitungseinrichtung 8 verarbeitet.

Ferner ist eine Lichtquelle 10 vorgesehen, mit der die Vorderseite 11 des Gehäuses 3 beleuchtet wird. Hierzu muß zumindest in der Meßposition die Unterseite der Transportschiene 1, auf der das Gehäuse 3 aufliegt aus einem lichtdurchlässigen Material bestehen. Durch diese Hintergrundbeleuchtung entsteht eine Schattenrißprojektion des lichtabsorbierenden Gehäuses 3. Von der Kamera 7 wird ein Bild der Schattenrißprojektion des Gehäuses 3 aufgenommen. Aus den daraus gewonnenen Bilddaten kann mit der Bildsignalverarbeitungseinrichtung 8 die Lage des Bauteils auf der Transportschiene 1 bestimmt werden. Die Umlaufkante des Gehäuses 3 kann vermessen werden, indem mit der in der Bildsignalverarbeitungseinrichtung 8 vorgesehenen Software eine Reihe von vordefinierten Punkte der Kante 12 des Gehäuses 3 genau vermessen wird. Die daraus ermittelte Kontur ist eine Referenz, aus der Referenzdaten für die weiteren Meßvorgänge erzeugt werden. Die Position der Kontaktpunkte P der Kontaktanschlüsse 5 können als Referenzdaten einschließlich eines Toleranzbereiches relativ zu einer Kante 12 des Gehäuses 3 vorausberechnet werden.

Das Ergebnis eines Meßvorgangs ist in Fig. 2 gezeigt. Dort ist ein Gehäuse 3 eines Halbleiterbauteils gezeigt, welches entlang zweier einander gegenüberliegender Kanten 12a, 12b jeweils eine Reihe von Kontaktanschlüssen 5 aufweist. Auf einem Hintergrund 13 erkennt man den Schattenriß der gesamten Umlaufkante 12 des Gehäuses 3. Die Positionsdaten der Umlaufkante 12 werden aus der Messung mit der Hintergrundbeleuchtung mittels der Lichtquelle 10 erhalten. Mit der Auflichtbeleuchtung mittels der Beleuchtungseinrichtung 6 werden Lichtreflexbereiche 14 erzeugt, die die Position der Kontaktpunkte P der Kontaktanschlüsse 5 wiedergeben. Aus der Messung der Umlaufkante 12 des Gehäuses 3 können mit der Bildsignalverarbeitungsrichtung 8 die Positionen der Kontaktpunkte P der Kontaktanschlüsse 5 in der xy-Ebene einschließlich eines vorgegebenen Toleranzbereiches berechnet werden. Durch Vergleich der gewonnen Meßdaten der Lichtreflexbereiche 14 mit den so berechneten Werten kann dabei bestimmt werden, ob das Bauteil in dem Gehäuse 3 für die vorgesehene Anwendung verwendet werden kann oder aussortiert werden muß. Die aus der Messung mit der Hintergrundbeleuchtung und der Auflichtbeleuchtung gewonnen Daten können so verarbeitet werden, daß sie gemeinsam in einem Bild dargestellt werden, wie es in Fig. 2 gezeigt ist.

In der Darstellung des Meßergebnisses der Fig. 2 entnimmt man, daß die Lichtreflexbereiche 14 und damit die Kontaktpunkte P entlang der Kante 12b im wesentlichen entlang einer Reihe liegen und somit keine wesentliche Abweichung in y-Richtung erkennbar ist. Entlang der Kante 12a gibt es einen Lichtreflexbereich 15, der eine deutliche Abweichung in y-Richtung von der Reihe der anderen Lichtreflexbereiche 14 aufweist. Das zugehörige Halbleiterbauteil müßte nun aussortiert werden. Für die Art und Weise des Aussortierens gibt es verschiedene Möglichkeiten. Das Aussortieren kann automatisch erfolgen, in dem auf oder hinter der Transportschiene eine entsprechende Vorrichtung vorgesehen ist, an die entsprechende Meßsignale weitergegeben werden. Das Aussortieren kann beispielsweise durch Öffnen einer Klappe erfolgen. Es können aber auch die auszusortierenden Bauelemente mit einer Markierung versehen werden und anschließend durch Überprüfen der Markierung aussortiert werden.

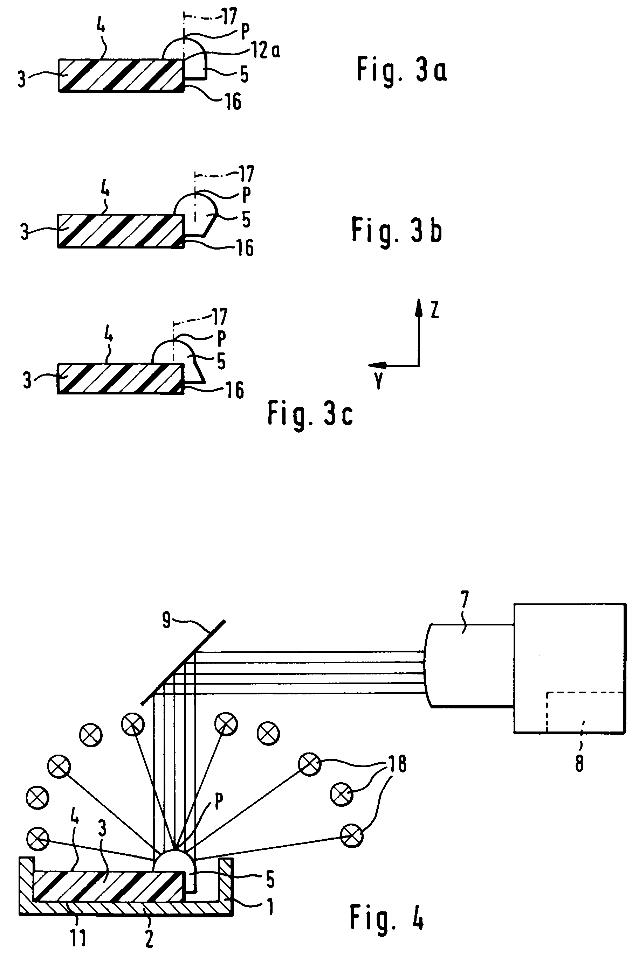

In der Fig. 3 ist dargestellt, wie eine Verschiebung des Kontaktpunktes P eines Kontaktanschlusses 5 in der xy-Ebene zustande kommen kann. Fig. 3a zeigt ein Gehäuse 3 im Querschnitt, das einen korrekten j-förmigen Kontaktanschluß 5 aufweist. Der Kontaktanschluß 5 erstreckt sich dabei von einer Seitenfläche 16 des Gehäuses 3 auf dessen Unterseite 4. In diesem Beispiel ist der Kontaktanschluß so angeordnet, daß sich der Kontaktpunkt P genau über der Kante 12a des Bauelementes 3 befindet. Eine Projektionslinie 17 senkrecht zu der Unterseite 4 des Gehäuses 3 durch den Kontaktpunkt P endet in diesem Fall genau auf der Kante 12a des Gehäuses 3.

In Fig. 3b ist die gleiche Anordnung des Gehäuses 3 gezeigt, bei der der Kontaktanschluß nach außen verbogen ist (bow out). Derartige Verbiegungen können bei den Stanz- und Formprozessen, die zur Herstellung der Kontaktanschlüsse 5 erforderlich sind, zustande kommen. In einem solchen Fall liegt der Kontaktpunkt P in z-Richtung, also senkrecht zur xy-Ebene in gleicher Höhe wie der Kontaktpunkt P des korrekten Kontaktanschlusses 5 aus Fig. 3a. Er ist lediglich in der xy-Ebene, in dem gezeigten Beispiel in der y-Richtung verschoben. Ein derartiger Fehler in dem Kontaktanschluß 5 bewirkt, daß das Bauteil nicht mit diesem Kontaktanschluß auf die vorgesehen Kontaktanschlüsse einer Platine aufsitzt und somit nicht aufgelötet werden kann. Dieser Fehler läßt sich nur durch eine Vermessung in der xy-Ebene feststellen. Mit einer Höhenvermessung in der z-Richtung würde er nicht erkannt werden. Die Projektionslinie 17 durch den Punkt P endet in diesem Fall außerhalb des Gehäuses 3.

In Fig. 3c ist das gleiche Gehäuse 3 mit einem Kontaktanschluß 5 gezeigt, der nach innen gebogen ist (bow in). In diesem Fall ist der Kontaktpunkt P in y-Richtung nach innen verschoben. Einer Projektionslinie 17 durch den Kontaktpunkt P trifft in diesem Fall in das Innere des Gehäuses 3. In diesem Fall liegt ebenfalls kein Fehler des Kontaktanschlussses 5 in z-Richtung vor. Der Fehler kann hier ebenfalls nur durch die Vermessung der Projektion des Kontaktpunktes P in der xy-Ebene bestimmt werden.

In Fig. 4 ist ein weiteres Ausführungsbeispiel der Erfindung gezeigt. Analog wie in der Fig. 1 ist auf der Transportschiene 1 ein Halbleiterbauteil in einem Gehäuse so angeordnet, daß die Oberseite 11 des Gehäuses auf der Transportschiene in einer Meßposition 2 aufliegt, wobei die Unterseite 4 des Gehäuses 3 nach oben zeigt. Das von Kontaktanschlüssen 5, von denen einer sichtbar ist, im wesentlichen senkrecht reflektierte Licht wird über einen Strahlteiler 9 in eine Kamera 7 gelenkt. In dieser ist eine Bildsignalverarbeitungseinricht 8 vorgesehen, in der die Bildsignale, die durch eine Aufnahme der Kamera 7 erzeugt werden, gespeichert und verarbeitet werden. Im Unterschied zu der Fig. 1 sind hier mehrere Einzelbeleuchtungsquellen 18 angeordnet, mittels denen jeweils ein Lichtstrahl unter einem vorgegebenen Winkel auf den Kontaktanschluß gelenkt wird. Die Einzelbeleuchtungsquellen 18 sind im wesentlichen auf einem Kreisbogen um den Kontaktanschluß 5 in etwa gleichem Abstand zueinander angeordnet. Da der Einfallswinkel und der Reflexionswinkel fest vorgegeben sind, läßt sich aus dieser Anordnung die Steigung der Tangente an verschiedenen Stellen entlang des Kontaktanschlusses 5 vermessen. Hieraus kann eine genaue Analyse des Bogenprofils des Kontaktanschlusses 5 gewonnen werden. Die Form des Kontaktanschlusses 5 gibt Aufschluß über die Qualität und Stabilität des Kontaktanschlusses und über die Planarität der Kontaktfläche in dem Kontaktpunkt P. Es ist aufgrund des Bogenprofils beispielsweise auch erkennbar, ob sogenannte „pitholes" (kleine Löcher im Metall bzw. Verengungen) aufgrund von Photoprozessen oder Ätzprozessen in dem Metall vorliegen. Diese würden einen Kontaktanschluß sehr instabil machen. Ferner bewirkt eine unregelmäßige Krümmung des Kontaktanschlusses 5, daß dieser eine geringe mechanische Stabilität hat, so daß er sich beim Auflöten auf die Platine verbiegen kann. Die Kriterien an das Bogenprofil eines Kontaktanschlusses können je nach Anforderungen an das Halbleiterbauteil vorgegeben werden. In der Bildsignalverarbeitungseinrichtung 8 können die gemessenen und verarbeiteten Werte mit entsprechend vorgegebenen Referenzwerten verglichen werden. Wenn die Abweichung außerhalb von vorgegebenen Toleranzbereichen liegen, können die Bauteile wie oben beschrieben aussortiert werden. Es ist ferner eine nicht gezeigte Steuereinrichtung vorgesehen, mit der die Einzelbeleuchtungsquellen 18 nacheinander aktiviert werden können und das von diesen kommende und an den Kontaktanschlüssen 5 reflektierte Licht jeweils von der Kamera 7 aufgenommen wird und in der Bildsignalverarbeitungseinrichtung 8 verarbeitet werden kann. Diese Meßanordnung kann sowohl einzeln verwendet werden als auch mit der Anordnung der Fig. 1 kombiniert werden.

**Patentansprüche**

1. Verfahren zum automatischen Überprüfen von Positionsdaten j-förmiger elektrischer Kontaktanschlüsse (5) an einem, in ein Gehäuse (3) eingebrachtes Halbleiterbauteil bezüglich einer zu der Unterseite (4) des Gehäuses (3) parallelen Ebene, wobei das Gehäuse (3) aus einem lichtabsorbierenden Material besteht, und die Kontaktanschlüsse (5) sich von einer Seitenfläche (16) des Gehäuses (3) zu dessen Unterseite (4) erstrecken, bei dem das Halbleiterbauteil einer Meßanordnung zugeführt wird, in welcher die Unterseite (4) des Gehäuses (3) mittels Licht aus einer Beleuchtungseinrichtung (6, 18) unter mindestens einem reproduzierbaren Beleuchtungswinkel, insbesondere unter einem im wesentlichen senkrechten Beleuchtungswinkel, beleuchtet wird, das von der Unterseite (4) des Gehäuses (3) und den Kontaktanschlüssen (5) im wesentlichen senkrecht reflektierte Licht von einer Kamera (7) ortsauflösend aufgenommen wird, die Bildsignale der Kamera (7) einer Bildsignal-Verarbeitungseinrichtung (8) zugeführt werden und wenigstens ein Datensatz mit einem dem Halbleiterbauteil zugeordneten Erkennungszeichen gespeichert wird, und aus den Bildsignalen Positionsdaten der Kontaktanschlüsse (5) bestimmt werden, und durch einen Vergleich der Positionsdaten mit Referenzdaten eine Abweichung der Positionsdaten von vorgegebenen Sollwerten bestimmt wird.

2. Verfahren nach Anspruch 1, dadurch gekennzeichnet, daß die Halbleiterbauteile, deren Positionsdaten von den vorgegebenen Sollwerten abweichen, automatisch aussortiert werden.

3. Verfahren nach Anspruch 1 oder 2, dadurch gekennzeichnet, daß die Oberseite (11) des Gehäuses (3) mittels einer Lichtquelle (10) beleuchtet wird, wobei das in die Kamera (7) gestreute Licht gemessen wird und aus dem so gewonnenen Datensatz von Bildsignalen die Lage von wenigstens einer Kante (12a, 12b, 12) des Gehäuses bestimmt und gespeichert wird.

4. Verfahren nach einem der vorangehenden Ansprüche, dadurch gekennzeichnet, daß die Bildsignale mit einem vorgegebenen Schwellwert verglichen werden, die Bildsignale, die größer als der Schwellwert sind, zur Bestimmung von Reflexgebieten verwendet werden, durch welche die jeweilige Position der Kontaktanschlüsse (4) in einer zu der Unterseite (11) parallelen Ebene bestimmt wird.

5. Verfahren nach Anspruch 4, dadurch gekennzeichnet, daß der jeweilige Schwerpunkt der Reflexgebiete (14) ermittelt wird.

6. Verfahren nach Anspruch 4 oder 5, dadurch gekennzeichnet, daß die Lage der Reflexgebiete (14) bzw. der Schwerpunkte der Reflexgebiete (14) relativ zu einer Kante (12a, 12b) des Gehäuses (3) bestimmt wird.

7. Verfahren nach Anspruch 4 oder 5, dadurch gekennzeichnet, daß die relative Lage der Reflexgebiete (14) bzw. der Schwerpunkte der Reflexgebiete (14) zueinander ermittelt wird, wobei insbesondere der Abstand eines Reflexgebietes (14) zu den benachbarten Reflexgebieten (14) bzw. der Abstand eines Reflexgebietes (14) von einer durch die Reflexgebiete (14) parallel zu einer Kante (12a, 12b) des Gehäuses (3) verlaufenden Geraden bestimmt wird.

8. Verfahren nach einem der vorangehenden Patentansprüche, dadurch gekennzeichnet, daß als Referenzdaten die gespeicherten Bildsignale einer vorangegangenen Messung an einem oder Mittelwerte von den Bildsignalen von vorangegangenen Messungen an mehreren Gehäusen (3) mit korrekt angeordneten Kontaktanschlüssen (5) verwendet werden.

9. Verfahren nach einem der vorangehenden Patentansprüche, dadurch gekennzeichnet, daß Licht unter verschiedenen Beleuchtungswinkeln nacheinander auf das Gehäuse (3) und die Kontaktanschlüsse (5) gelenkt wird, jeweils das senkrecht von dem Gehäuse (3) und den Kontaktanschlüssen (5) reflektierte Licht von der Kamera (7) aufgenommen und die pro Beleuchtungswinkel erzeugten Bilddaten jeweils als ein Datensatz gespeichert werden und aus den zu einem Halbleiterbauteil gehörenden Datensätzen Formdaten der Kontaktanschlüsse (5) bestimmt und mit Referenzdaten verglichen werden.

10. Vorrichtung zum Durchführen des Verfahrens nach einem der Ansprüche 1 bis 8, mit einer Beleuchtungseinrichtung (6, 18), einer von dieser räumlich getrennt angeordneten Kamera (7), einer Bildsignal-Verarbeitungseinrichtung (8) und einer Transporteinrichtung (1) zum Zuführen der Halbleiterbauteile zu einer Meßposition (2), wobei zwischen der Meßposition (2) und der Kamera (7) bzw. der Beleuchtungseinrichtung (6, 18) ein Strahlteiler (9) angeordnet ist, mit dem das Licht der Beleuchtungseinrichtung (6, 18) auf das Gehäuse (3) bzw. das von dem Gehäuse (3) und den Kontaktanschlüssen (5) reflektierte Licht in die Kamera (7) lenkbar ist.

11. Vorrichtung nach Anspruch 10, dadurch gekennzeichnet, daß unter den verschiedenen Beleuchtungswinkeln Einzel-Beleuchtungsquellen (18), die insbesondere Leuchtdioden umfassen, in etwa gleichem Abstand voneinander auf einem Kreisbogen um die Meßposition (2) angeordnet sind.

12. Vorrichtung nach Anspruch 10 oder 11, dadurch gekennzeichnet, daß eine Transporteinrichtung (1), insbesondere einer Transportschiene, vorgesehen ist, über welche die Halbleiterbauteile der Meßposition (2) nacheinander zugeführt werden.

13. Vorrichtung nach einem der Ansprüche 10 - 12, dadurch gekennzeichnet, daß eine Lichtquelle (10) zur Beleuchtung der Oberseite (11) des Gehäuses (3) in der Meßposition (2) vorgesehen ist, durch die eine indirekte Hintergrundbeleuchtung erzeugbar ist.

Fig. 1

Fig. 2

Fig. 3a

Fig. 3b

Fig. 3c

Fig. 4